# EUROPEAN PATENT SPECIFICATION

(11) **EP 1 190 555 B1**
(45) Date of publication and mention of the grant of the patent: **30.03.2005**
(21) Application number: 99939975.1
(22) Date of filing: 30.06.1999
(51) Int. Cl.: H04M 1/57

(54) **METHOD AND SYSTEM FOR PROVIDING A CALLER PICTURE**
VERFAHREN UND SYSTEM ZUR BEREITSTELLUNG EINES BILDES DES ANRUFERS
PROCEDE ET SYSTEME DE FOURNITURE DE L'IMAGE D'UN APPELANT

(43) Date of publication of application: 27.03.2002
(73) Proprietor: Nokia Corporation, 02150 Espoo (FI)
(72) Inventor: KALL, Jan, FIN-02730 Espoo (FI)
(74) Representative: Pellmann, Hans-Bernd, Dipl.-Ing.
(86) International application number: PCT/EP1999/004519
(87) International publication number: WO 2001/003406

(56) References cited:
- EP-A- 0 436 345
- EP-A- 0 474 555
- EP-A- 0 741 484
- JARNO KNUUTILA, JARI HAMALAINEN: "Migration towards multimedia capability in GSM high speed data terminals" IEEE,1998, pages 89-94, XP002133553 Tampere, Finland

## Description

### FIELD OF THE INVENTION

The present invention relates to a method and system for providing a caller picture via a telecommunication network to a called party.

### BACKGROUND OF THE INVENTION

Conventionally, multi-media communication apparatuses capable of performing speech and image communication via a communication line are known.

Document US 5,414,457, for example, discloses a communication apparatus, wherein, in a reception state, an image of a calling party and a selection signal for a telephone number are registered in a volatile memory in correspondence with each other, and the registered image is displayed on an image display section. When a calling operation is performed to a party corresponding to the registered image, an operator need only designate the image of the party to be called from displayed images, and a CPU automatically outputs a selection signal for a telephone number corresponding to the designated image. Therefore, the image of a party to be called can be visually recognized before calling. Thus, since calling can be made after confirmation of an image such as a face of a party to be called, a dialing error can be prevented. However, a subscriber B may only store an image information transmitted from a subscriber A and to be used when the subscriber B is about to make a call to the subscriber A. Thus, the subscriber B does not receive a caller picture from the subscriber A, before answering to the phone, if the subscriber A has not phoned him up before.

Furthermore, document US 5,761,279 discloses a system for displaying a graphic information such as a facial representation on a communication's terminal. The facial representation is digitized, compressed and stored in a memory at an appropriate control center of a communication network. Upon receipt of a display command, the digitized data is retrieved from a memory and transmitted to the called party's display terminal using a modem technology. However, the user has to provide a photo to the service provider in advance, who digitizes it. Thus, the caller pictures are not real-time pictures and their quality is not very high.

Thus, a drawback of the above prior art ist that the caller picture is determined in advance and cannot be changed according to the actual needs of the calling party.

Reference is also made to documents EP-A-0741484 and to "Migration towards multimedia capability in GSM high speed data terminals", IEEE, 1998, J.Knuntila, J.Hamalainen, Tampen, Finlant.

### SUMMARY OF THE INVENTION

It is therefore an object of the present invention to provide a method and system for providing a caller picture to a called party in a more flexible manner.

This object is achived by the invention as set out in the independent claims 1, 7, 11 and 17, preferred forms being set out in the dependent claims.

This object is achieved by a method for providing a caller picture via a telecommunication network to a called party, comprising the steps of:
generating the caller picture at a terminal of a calling party;
transmitting the caller picture to the telecommunication network at the beginning of a call;
storing the caller picture at a network element of the telecommunication network; and
transmitting the caller picture from the network element to a terminal of the called party.

Furthermore, the above object is achieved by a system for providing a caller picture to a called party via a telecommunication network, having a plurality of terminals and at least one network element for routing calls,
wherein said plurality of terminals comprise camera means for generating the caller picture, display means for displaying the caller picture, and transmitting means for transmitting the caller picture to the at least one network element at the beginning of a call; and
wherein the network element comprises receiving means for receiving the caller picture, storing means for storing the caller picture, and transmitting means for transmitting the caller picture to a terminal of the called party.

Accordingly, a camera function is provided at the terminal of a calling party, such that the terminal both digitizes a caller picture and transmits it to the network element of the telecommunication network. Then, the network element which may be a switching means, stores the picture. Thereby, a much better quality of the caller picture can be achieved, and not only a facial representation, but anything just like post cards can be transmitted in real-time to the called party. Therefore, the picture is up-to-date and a selection function for selecting one of a plurality of centrally stored caller pictures based on the calling person is not required.

Preferably, the transmission of the caller picture to the network element, the storing of the caller picture at the network element, and the transmission of the caller picture from the network element to the terminal of the called party are performed in response to a subscriber information indicating a subscription of a supplementary service for providing the caller picture. Thus, the user may subscribe a supplementary service if he wishes to provide or receive a caller picture. The subscriber information may either indicate a caller picture presentation or a caller picture presentation restriction.

Preferably, the caller picture is taken by the camera function at the beginning of the call. Additionally, the caller picture may selectively be stored in a memory of the terminal of the calling party, and may be transmitted from the memory to the telecommunication network at the beginning of the call. In this case, the selective storing operation of the caller picture in the memory of the terminal of the calling party may be performed in accordance with a selection input operation at the terminal of the called party. Thereby, the calling person may store any picture taken in advance, wherein the stored picture may then be transmitted via the network element to the called party at the beginning of the call.

Preferably, the network element comprises a control means for checking a subscriber information of the called party stored in a subscriber data base, and for controlling the storing means based on the subscriber information. In particular, the data base may be a location register of a mobile network. The telecommunication network may be a GSM or a UMTS network. The network element may be a switching means such as a mobile switching center or a serving GPRS support node (SGSN).

The terminal of the calling party may comprise a switching means for selectively connecting a transmitting means to a camera means or to a memory means in accordance with a selection operation of a selection means for selecting a direct transmission operation in which the caller picture is generated and transmitted at the beginning of the call, or a memory operation in which the caller picture is generated and stored in the memory means from which it can be transmitted later. Thereby, a flexible generation timing of the caller picture can be provided.

The subscriber terminal may be a mobile terminal of a mobile communication network. Furthermore, the terminal of the called party as well as a terminal of a calling party may both be mobile terminals.

### BRIEF DESCRIPTION OF THE DRAWINGS

In the following, the present invention will be described in greater detail on the basis of a preferred embodiment with reference to the accompanying drawings, in which:
Fig. 1 shows a principle block diagram of a mobile telecommunication network in which the method and system according to the present invention is implemented;
Fig. 2 shows a principle block diagram of a mobile terminal according to the preferred embodiment of the present invention;
Fig. 3 shows a principle block diagram of a mobile switching center according to the preferred embodiment of the present invention; and
Fig. 4 shows a flow diagram of an operation of the mobile switching center according to the preferred embodiment of the present invention.

### DESCRIPTION OF THE PREFERRED EMBODIMENT

In the following, the preferred embodiment of the method and system according to the present invention will be described on the basis of a mobile telecommunication network such as a GSM or UMTS network.

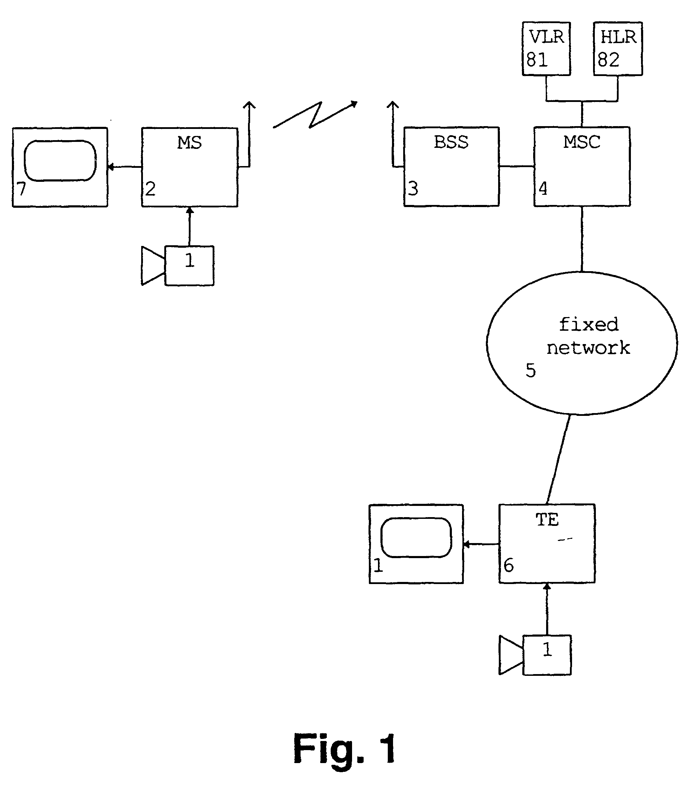

Fig. 1 shows a principle block diagram of a mobile communication network comprising a mobile terminal or mobile station (MS) 2 having an integrated or separate camera 1 and an integrated or separate display 7 for displaying a picture taken at a terminal of a calling party. In the following, this picture is referred to as caller picture.

The MS 2 is radio-connected to a Base Station Subsystem (BSS) 3 which is connected to a Mobile Switching Center (MSC) 4 arranged to provide a switching function for switching or routing received calls according to the location of the called party. Furthermore, subscriber data bases such as a Visitor Location Register (VRL) 81 and a Home Location Register (HLR) 82 are connected to the MSC 4 so as to provide a file system for storing subscriber information such as a location information of mobile terminals, an information about supplementary (operator) services subscribed by individual subscribers, and the like.

The MSC 4 is connected via an interworking function to a fixed network 5 such as a Public Switched Telephone Network (PSTN) or an IN network. Thereby, a connection can be established between a multi-media end terminal (TE) 6 of the fixed network 5 and the MS 2. The TE 6 also comprises an external or internal camera 1 and an external or internal display 7.

According to the communication system shown in Fig. 1, a caller picture can be supplied to a called mobile station of the mobile telecommunication network or to the end terminal TE 6 of the fixed network 5. In particular, a caller picture taken by the camera 1 is transferred via the MSC 4 to the display 7 at the terminal of the called party at the beginning of the call. The calling party may selectively store the picture into a memory provided in the calling terminal, such as the MS 2 or the TE 6. Alternatively, the caller may take a picture just at the beginning of the call and may directly transmit the generated caller picture to the terminal of the called party. There are no limitations for the coding system of the picture, as long as the terminal of the called party is able to decode and display the image information received from the terminal of the calling party.

Furthermore, a supplementary service can be applied both to telephone calls and video calls. The supplementary service may be arranged to define a Caller Picture Presentation /Caller Picture Presentation Restriction (CPP/CPPR), wherein the subscriber defines by a corresponding service subscription whether a CPP or a CPPR is to be established for desired connections. The subscriber information defining the CPP/CPPR can be stored in the HLR 82 or the VLR 81, depending on the location of the MS 2.

Alternatively, a separate storing means may be provided in the MSC 4 for storing the above subscriber information. In the fixed network 5, the subscriber information may be stored in a corresponding data base of a switching means of the fixed network 5.

Thus, according to the preferred embodiment, both caller picture presentation and caller picture presentation restriction are defined as a supplementary service that can be applied to a telephone call (teleservice) or video call. These services can be subscribed to e.g. in GSM, UMTS or any other telecommunication system.

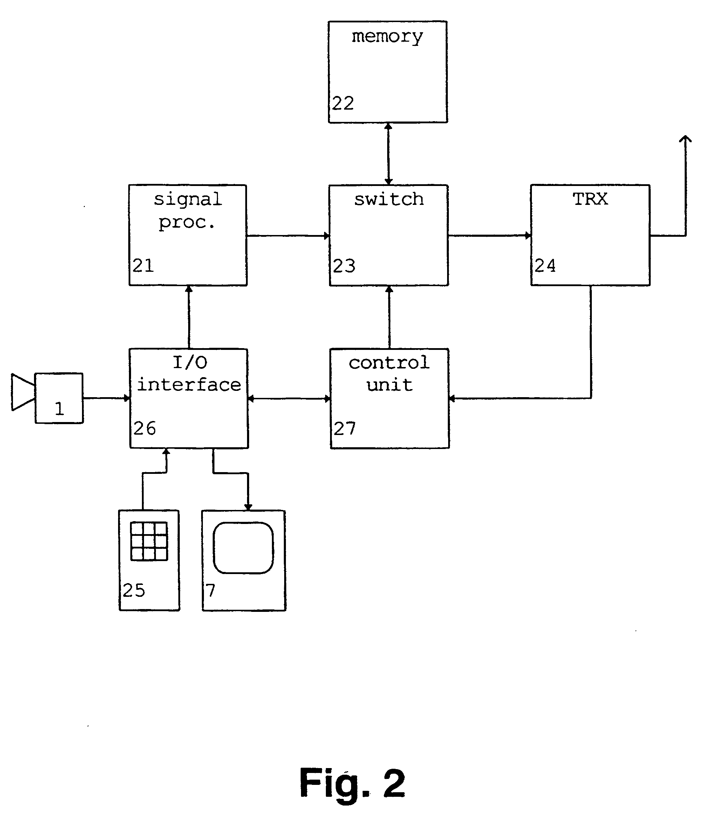

Fig. 2 shows a principle block diagram of the MS 2. It is to be noted that the same components are also included in the end terminal TE 6 of the fixed network 5. Therefore, the description of the present invention is restricted to the block diagram of the MS 2.

According to Fig. 2, the camera 1 which may be a separate or an integrated camera is connected via an I/O interface 26 to a signal processing unit 21 arranged for performing e.g. an encoding, encryption and/or compressing operation required for transmitting the generated caller picture via the communication network. The signal processing unit 21 is connected via a switch 23 either to a transceiver (TRX) 24 or to a volatile or non-volatile memory 22. Thus, a picture taken by the camera 1 may selectively be stored in the memory 22 or directly transmitted via the TRX 24 to the MSC 4.

The switch 23 is controlled by a control unit 27 connected to the TRX 24 and the I/O interface 26. The I/O interface 26 is further connected to the display 7 which may be an LCD or the like, and to an operating unit such as a key pad 25. In particular, the key pad 25 and the display 7 may correspond to the conventional input/output units of a multi-media end terminal.

In the block diagram shown in Fig. 2, a memory storing operation for storing a picture received from the camera 1 in the memory 22, a direct transmission operation for directly transmitting the picture received from the camera 1 to a called party, or a memory transmission operation for transmitting a caller picture stored in the memory 22 may be selected by a corresponding input operation at the key pad 25. Based on this input operation, the control unit 27 controls the switch 23 so as to selectively store the picture received from the camera 1 in the memory 22 or transmit an actual or stored picture via the TRX 24 to the called party. Furthermore, the control unit 27 may receive a subscriber information via the TRX 24 from the telecommunication network, wherein the subscriber information indicates a restriction of the supplementary CPP service. Based on this subscriber information, the control unit 27 may control the switch 23 so as to switch a picture taken by the camera 1 to the memory 22 irrespective of an input operation at the key pad 25. In this case, a corresponding error message indicating that the CPP service is not subscribed to can be displayed on the display 7.

Thus, at the beginning of a call, e.g. before or after the dialing operation, a calling person performs the above selection by a corresponding input operation at the key pad 25. The input operation may be controlled by the control unit 27 on the basis of a control menue displayed at the display 7. Additionally, a default operation may be provided, if a selection is not performed. The corresponding control program may be stored in a non-volatile program memory (not shown) provided in the control unit 27.

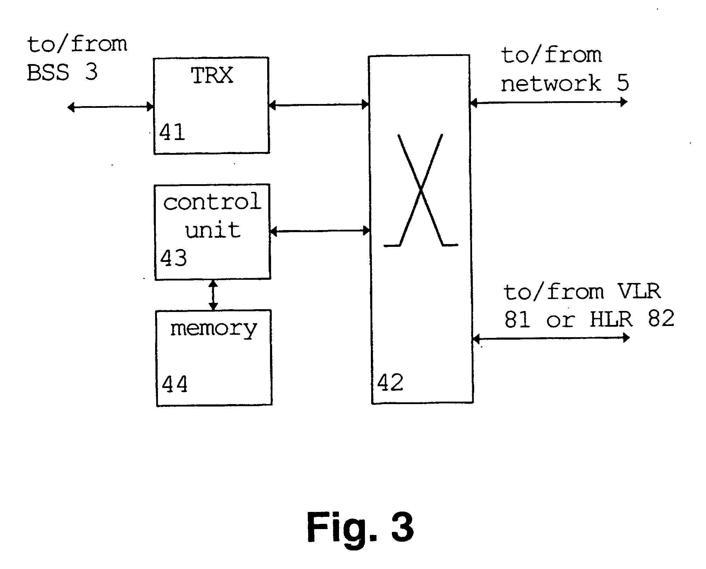

Fig. 3 shows a principle block diagram of the MSC 4. According to Fig. 3, the MSC 4 comprises a transceiver (TRX) 41 connected to the BSS 3. The TRX 41 is connected to a switch 42 arranged to perform switching according to the location of the desired called party. Furthermore, the switch 42 is connected to the VLR 81 and the HLR 82, such that the MSC 4 may refer to the subscriber information of a calling party or a called party.

Furthermore, the MSC 4 comprises a control unit 43 arranged for controlling a storing function of a caller picture received from a calling party in a corresponding memory 44. Thus, in case a call is received by the MSC 4, it refers to the VLR 81 or HLR 82 in order to retrieve the corresponding subscriber information of the called party and/or the calling party. In case the subscriber information of the called party indicates that the CPPR has been activated, i.e. the caller picture presentation is restricted, the control unit 43 inhibits the storing of the received caller picture in the memory 44. Furthermore, a function may be provided according to which the MSC 4 transmits a subscriber information to the calling party so as to indicate that the caller picture presentation is restricted at the called terminal. Based on this subscriber information, the terminal of the calling party may inhibit the transmission of the caller picture. The same operations indicated above may be performed if the MSC 4 determines based on the retrieved subscriber information that the calling party has restricted the caller picture presentation.

In case the subscriber information retrieved from the VLR 81 or the HLR 82 indicates that the caller picture presentation is subscribed or activated by the called party, the control unit 43 controls the memory 44 so as to store the received caller picture. After the connection has been established between the calling party and the called party, the stored caller picture is transmitted from the MSC 4 to the called party, so as to be displayed at the terminal of the called party. Based on the displayed caller picture, the called party may decide whether to respond to the call or not.

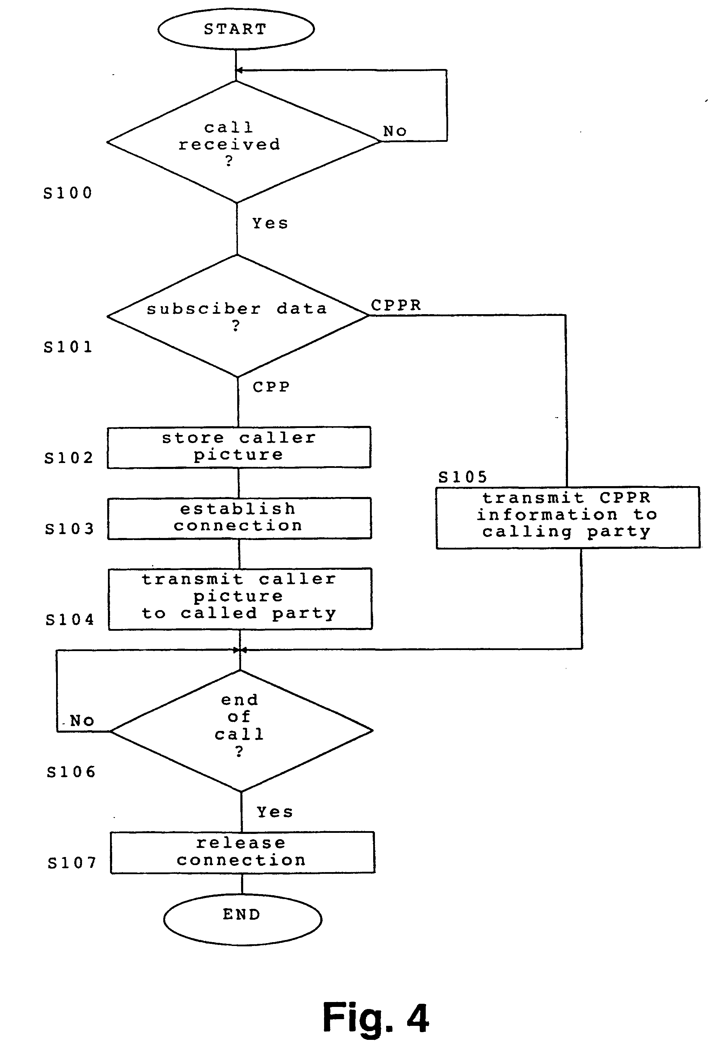

Fig. 4 shows a principle block diagram of a processing performed by the control unit 43 of the MSC 4.

Initially, it is determined in step S100 whether a call has been received. If not, the control unit waits in step S100 until a call has been received from the mobile network. If a call has been received, the control unit 43 initiates a checking operation so as to refer to the subscriber data base, e.g. the VLR 81 or the HLR 82 (S101). In case the checking step indicates that the CPPR is activated for the called party, the flow branches to an optional step S105 where a corresponding CPPR information is transmitted to the calling party so as to indicate the restricted caller picture presentation. In case the CPP is activated, i.e. the called party has subscribed to the caller picture presentation, the image data of the caller picture are received and stored in the memory 44 (step S102). Thereafter, the connection between the called party and the calling party is established in step S103, and the stored image data of the caller picture are transmitted in step S104 to the called party.

Then, the control unit 43 waits in step S106 for a signaling indicating the end of the call. If such a signaling has been received, the connection is released in step S107 and the flow returns to step S100 in order to wait for the receipt of a new call.

As already mentioned, the checking operation in step S101 may also be performed for the calling party, wherein the storing and transmission of the caller picture at the MSC 4 is only performed if both parties have not restricted the caller picture presentation service.

It is to be pointed out that the caller picture may be stored in any network element having a switching or routing function. In particular, the control operation according to Fig. 4 may be performed in a Service GPRS Support Node (SGSN) of a General Packet Radio System (GPRS), or in any switching means of the fixed network 5. Furthermore, the present invention may be applied to any telecommunication network to which multi-media communication apparatuses can be connected. The subscriber terminal may be a terminal or device connected to a fixed lines telecommunications network, such as a PSTN, ISDN or a local area (data) network.

As an alternative, the caller picture may be transferred between two mobile terminals, wherein a service is provided for transmitting the caller picture via the MSC 4 to a called mobile terminal at the beginning of a mobile connection.

The above description of the preferred embodiment and the accompanying drawings are only intended to illustrate the present invention. The preferred embodiment of the invention may thus vary within the scope of the attached claims.

In summary, the present invention relates to a method and system for providing a caller picture via a telecommunication network to a called party. When the calling party makes a call, the caller picture is transferred to the network and further to the terminal of the called party. The caller picture is generated and transmitted to an network element at the beginning of the call. Then, the network element stores the caller picture. Thereby, it is possible to achieve a better quality and to generate any caller picture at the terminal of the calling party in real-time, so as to provide an up-to-date picture. Alternatively, the caller picture can be stored in advance, such that the user may edit the caller picture before it is sent to the network. Furthermore, the caller picture presentation can be defined as a supplementary service which subscribers can subscribe to. (Fig. 1)

## Claims

1. A system for providing a caller picture to a called party via a telecommunication network having a plurality of terminals **(2, 6)** and at least one network element **(4)** for routing calls,
wherein each of said plurality of terminal **(2, 6)** comprises camera means **(1)** for generating said caller picture, display means **(7)** for displaying said caller picture, and transmitting means **(24)** for transmitting said caller picture to said at least one network element **(4)** at the beginning of a call;
wherein said network element **(4)** comprises receiving means **(41)** for receiving said caller picture, storing means **(44)** for storing said caller picture, and transmitting means **(42)** for transmitting said caller picture to a terminal of said called party,
wherein each of said plurality of terminals **(2, 6)** comprises memory means **(22)** for storing said caller picture; and selecting means **(25)** for selecting a direct transmission operation in which said caller picture is generated and transmitted at the beginning of the call, or a memory operation in which said caller picture is generated and stored in said memory means **(22),** and
wherein said network element **(4)** comprises control means **(43)** for checking a subscriber information of said called party, stored in a subscriber data base **(81, 82),** and for controlling said storing means **(44)** based on said subscriber information,
wherein said subscriber information indicates a subscription to a caller picture presentation service.

2. A system according to claim 1, wherein said data base is a location register **(81, 82).**

3. A system according to claim 1 or 2, wherein said network element **(4)** is a switching means of said telecommunication network.

4. A system according to claim 3, wherein said switching means is a mobile switching center **(4)** or an SGSN.

5. A system according to any one of claims 1 to 4, wherein said telecommunication network is a GSM or a UMTS network.

6. A system according to any one of claims 1 to 5, wherein said terminal of said called party and a terminal of a calling party are both mobile terminals.

7. A network element for a telecommunication network, comprising:
receiving means **(41)** for receiving a caller picture from a terminal **(2)** of a calling party at the beginning of a call;
storing means **(44)** for storing said caller picture;
transmitting means **(42)** for transmitting said caller picture to a terminal **(6)** of a called party, and
control means **(43)** for checking a subscriber information of said called party, stored in a subscriber data base **(81, 82),** and for controlling said storing means **(44)** based on said subscriber information,
wherein said subscriber information indicates a subscription to a caller picture presentation service.

8. A network element according to claim 7, further comprising control means **(43)** for checking a subscriber information of said called party, stored in a subscriber data base **(81, 82)** and for controlling said storing means **(44)** so as to perform the storing operation based on said subscriber information.

9. A network element according to claim 8, wherein said control means **(43)** is arranged to transmit a restriction information to said calling party, if said subscriber information indicates that the called party is not subscribed to a caller picture presentation service.

10. A network element according to any one of claims 7 to 9, wherein said network element is a switching means **(4)** of said telecommunication network.

11. A method for providing a caller picture via a telecommunication network to a called party, comprising the steps of:
a) generating said caller picture at a terminal of a calling party;
b) transmitting said caller picture to said telecommunication network at the beginning of a call;
c) storing said caller picture at a network element of said telecommunication network; and
d) transmitting said caller picture from said network element to a terminal of said called party;
wherein said network element receives said caller picture and stores said caller picture,
wherein said terminal selects a direct transmission operation in which said caller picture is generated and transmitted at the beginning of the call, or a memory operation in which said caller picture is generated and stored in a memory means **(22),**
wherein said network element **(4)** checks a subscriber information of said called party, stored in a subscriber data base **(81, 82),** and controls said storing based on said subscriber information,
wherein said subscriber information indicates a subscription of a caller picture presentation service.

12. A method according to claim 11, wherein steps b) to d) are performed in response to a subscriber information indicating a subscription of a supplementary service for providing said caller picture.

13. A method according to claim 12, wherein said subscriber information indicates a caller picture presentation or a caller picture presentation restriction.

14. A method according to any one of the preceding method claims, wherein said caller picture is taken by a camera function at the beginning of the call.

15. A method according to anyone of claims 11 to 14,
wherein said caller picture is selectively stored in a memory of said terminal of said calling party, and transmitted from said memory to said telecommunication network at the beginning of the call.

16. A method according to claim 15, wherein said selective storing operation of said caller picture in said memory of said terminal of said calling party is performed in accordance with a selection input operation at said terminal of said calling party.

17. A subscriber terminal of a telecommunication network having at least one network element for routing calls, said subscriber terminal **(2, 6)** being adapted for use in a system according to any one of the preceding system claims, or for use in a method according to any one of the preceding method claims, comprising:
a) camera means **(1)** for generating a caller picture;
b) display means **(7)** for displaying a received caller picture;
c) transmitting means **(24)** for transmitting said generated caller picture to said at least one network element **(4)** at the beginning of a call,
memory means **(22)** for storing said generated caller picture; and
selecting means **(25)** for selecting a direct transmission operation in which said caller picture is generated and transmitted at the beginning of the call, or a memory operation in which said caller picture is generated and stored in said memory means **(22).**

18. A subscriber terminal according to claim 17, further comprising switching means **(23)** for selectively connecting said transmitting means **(24)** to said camera means **(1)** or to said memory means **(22)** in accordance with a selection operation at said selection means **(25).**

19. A subscriber terminal according to claim 17 or 18, wherein said subscriber terminal is a mobile terminal **(2).**

20. A subscriber terminal according to any one of claims 17 to 19, wherein said subscriber terminal is a terminal or device connected to a fixed lines telecommunications network.

21. A subscriber terminal according to claim 20, wherein said fixed lines telecommunications network is a PSTN, ISDN or a local area network.

## Patentansprüche

1. System zur Bereitstellung eines Anruferbilds an eine gerufene Seite über ein Telekommunikationsnetzwerk mit einer Vielzahl von Endgeräten (2, 6) und mindestens einem Netzwerkelement (4) zur Leitweglenkung von Rufen,
wobei jedes der Vielzahl von Endgeräten (2, 6) eine Kameraeinrichtung (1) zum Erzeugen des Anruferbilds, eine Anzeigeeinrichtung (7) zum Anzeigen des Anruferbilds und eine Übertragungseinrichtung (24) zum Übertragen des Anruferbilds an das mindestens eine Netzwerkelement (4) zu Beginn eines Rufs aufweist;
wobei das Netzwerkelement (4) eine Empfangseinrichtung (41) zum Empfangen des Anruferbilds, eine Speichereinrichtung (44) zum Speichern des Anruferbilds und eine Übertragungseinrichtung (42) zum Übertragen des Anruferbilds an ein Endgerät der gerufenen Seite aufweist,
wobei jedes der Vielzahl von Endgeräten (2, 6) eine Speichereinrichtung (22) zum Speichern des Anruferbilds aufweist, sowie eine Auswahleinrichtung (25) zum Auswählen eines Direktübertragungsbetriebs, bei dem das Anruferbild zu Beginn des Rufs erzeugt und übertragen wird, oder eines Speicherbetriebs, bei dem das Anruferbild erzeugt und in der Speichereinrichtung (22) gespeichert wird, und
wobei das Netzwerkelement (4) eine Steuereinrichtung (43) aufweist zum Überprüfen einer Teilnehmerinformation der gerufenen Seite, die in einer Teilnehmerdatenbank (81, 82) gespeichert ist, und zum Steuern der Speichereinrichtung (44) basierend auf der Teilnehmerinformation,
wobei die Teilnehmerinformation eine Abonnierung eines Anruferbild-Darstellungsdienstes bezeichnet.

2. System gemäß Anspruch 1, bei dem die Datenbank ein Standortverzeichnis (81, 82) ist.

3. System gemäß Anspruch 1 oder 2, bei dem das Netzwerkelement (4) eine Vermittlungseinrichtung des Telekommunikationsnetzwerks ist.

4. System gemäß Anspruch 3, bei dem die Vermittlungseinrichtung eine Mobilvermittlungsstelle (4) oder ein SGSN ist.

5. System gemäß einem der Ansprüche 1 bis 4, bei dem das Telekommunikationsnetzwerk ein GSM- oder ein UMTS-Netzwerk ist.

6. System gemäß einem der Ansprüche 1 bis 5, bei dem sowohl das Endgerät der gerufenen Seite als auch ein Endgerät einer rufenden Seite mobile Endgeräte sind.

7. Netzwerkelement für ein Telekommunikationsnetzwerk, mit:
einer Empfangseinrichtung (41) zum Empfangen eines Anruferbilds von einem Endgerät (2) einer rufenden Seite zu Beginn eines Rufs;
einer Speichereinrichtung (44) zum Speichern des Anruferbilds;
einer Übertragungseinrichtung (42) zum Übertragen des Anruferbilds an ein Endgerät (6) einer gerufenen Seite, und
einer Steuereinrichtung (43) zum Überprüfen einer Teilnehmerinformation der gerufenen Seite, die in einer Teilnehmerdatenbank (81, 82) gespeichert ist, und zum Steuern der Speichereinrichtung (44) basierend auf der Teilnehmerinformation,
wobei die Teilnehmerinformation eine Abonnierung eines Anruferbild-Darstellungsdienstes bezeichnet.

8. Netzwerkelement gemäß Anspruch 7, zusätzlich mit einer Steuereinrichtung (43) zum Überprüfen einer Teilnehmerinformation der gerufenen Seite, die in einer Teilnehmerdatenbank (81, 82) gespeichert ist, und zum Steuern der Speichereinrichtung (44) zur Durchführung des Speicherbetriebs basierend auf der Teilnehmerinformation.

9. Netzwerkelement gemäß Anspruch 8, bei dem die Steuereinrichtung (43) eingerichtet ist, eine Beschränkungsinformation an die rufende Seite zu übertragen, falls die Teilnehmerinformation bezeichnet, dass die gerufene Seite keinen Anruferbild-Darstellungsdienst abonniert hat.

10. Netzwerkelement gemäß einem der Ansprüche 7 bis 9, bei dem das Netzwerkelement eine Vermittlungseinrichtung (4) des Telekommunikationsnetzwerks ist.

11. Verfahren zum Bereitstellen eines Anruferbilds über ein Telekommunikationsnetzwerk an eine gerufene Seite, mit den Schritten:
a) Erzeugen des Anruferbilds an einem Endgerät einer rufenden Seite;
b) Übertragen des Anruferbilds an das Telekommunikationsnetzwerk zu Beginn eines Rufs;
c) Speichern des Anruferbilds an einem Netzwerkelement des Telekommunikationsnetzwerks; und
d) Übertragen des Anruferbilds vom Netzwerkelement an ein Endgerät der gerufenen Seite;
wobei das Netzwerkelement das Anruferbild empfängt und das Anruferbild speichert,
wobei das Endgerät einen Direktübertragungsbetrieb, bei dem das Anruferbild zu Beginn des Rufs erzeugt und übertragen wird, oder einen Speicherbetrieb auswählt, bei dem das Anruferbild erzeugt und in einer Speichereinrichtung (22) gespeichert wird,
wobei das Netzwerkelement (4) eine Teilnehmerinformation der gerufenen Seite überprüft, die in einer Teilnehmerdatenbank (81, 82) gespeichert ist, und das Speichern basierend auf der Teilnehmerinformation steuert,
wobei die Teilnehmerinformation eine Abonnierung eines Anruferbild-Darstellungsdienstes bezeichnet.

12. Verfahren gemäß Anspruch 11, bei dem Schritte b) bis d) als Reaktion auf eine Teilnehmerinformation durchgeführt werden, die eine Abonnierung eines Zusatzdienstes zur Bereitstellung des Teilnehmerbilds bezeichnet.

13. Verfahren gemäß Anspruch 12, bei dem die Teilnehmerinformation eine Anruferbild-Darstellung oder eine Anruferbild-Darstellungsbeschränkung bezeichnet.

14. Verfahren gemäß einem der vorhergehenden Verfahrensansprüche, bei dem das Anruferbild von einer Kamerafunktion zu Beginn des Rufs aufgenommen wird.

15. Verfahren gemäß einem der Ansprüche 11 bis 14, bei dem das Anruferbild wahlweise in einem Speicher des Endgeräts der rufenden Seite gespeichert und zu Beginn des Rufs aus dem Speicher an das Telekommunikationsnetzwerk übertragen wird.

16. Verfahren gemäß Anspruch 15, bei dem der wahlweise Speicherbetrieb des Anruferbilds in dem Speicher des Endgeräts der rufenden Seite gemäß einem Auswahleingabebetrieb am Endgerät der rufenden Seite durchgeführt wird.

17. Teilnehmerendgerät eines Telekommunikationsnetzwerks mit mindestens einem Netzwerkelement zur Leitweglenkung von Rufen, wobei das Teilnehmerendgerät (2, 6) zur Verwendung in einem System gemäß einem der vorhergehenden Systemansprüche oder zur Verwendung bei einem Verfahren gemäß einem der vorhergehenden Verfahrensansprüche angepasst ist, mit:
a) einer Kameraeinrichtung (1) zum Erzeugen eines Anruferbilds;
b) einer Anzeigeeinrichtung (7) zum Anzeigen eines empfangenen Anruferbilds;
c) einer Übertragungseinrichtung (24) zum Übertragen des erzeugten Anruferbilds an das mindenstens eine Netzwerkelement (4) zu Beginn eines Rufs,
einer Speichereinrichtung (22) zum Speichern des erzeugten Anruferbilds; und
einer Auswahleinrichtung (25) zum Auswählen eines Direktübertragungsbetriebs, bei dem das Anruferbild zu Beginn des Rufs erzeugt und übertragen wird, oder eines Speicherbetriebs, bei dem das Anruferbild erzeugt und in der Speichereinrichtung (22) gespeichert wird.

18. Teilnehmerendgerät gemäß Anspruch 17, zusätzlich mit einer Schalteinrichtung (23) zum wahlweisen Verbinden der Übertragungseinrichtung (24) mit der Kameraeinrichtung (1) oder mit der Speichereinrichtung (22) gemäß einem Auswahlbetrieb an der Auswahleinrichtung (25).

19. Teilnehmerendgerät gemäß Anspruch 17 oder 18, bei dem das Teilnehmerendgerät ein mobiles Endgerät (2) ist.

20. Teilnehmerendgerät gemäß einem der Ansprüche 17 bis 19, bei dem das Teilnehmerendgerät ein Endgerät oder eine Vorrichtung ist, das/die mit einem Telekommunikationsfestnetz verbunden ist.

21. Teilnehmerendgerät gemäß Anspruch 20, bei dem das Telekommunikationsfestnetz ein PSTN-, ein ISDN- oder ein lokales Netzwerk ist.

## Revendications

1. Système pour fournir une photo d'appelant à un tiers appelé par l'intermédiaire d'un réseau de télécommunication comportant une pluralité de terminaux (2, 6) et au moins un élément de réseau (4) pour acheminer des appels,
dans lequel chacun de ladite pluralité de terminaux (2, 6) comprend des moyens formant appareil photo (1) pour générer ladite photo d'appelant, des moyens d'affichage (7) pour afficher ladite photo d'appelant et des moyens d'émission (24) pour émettre ladite photo d'appelant vers ledit au moins un élément de réseau (4) au début d'un appel ;
dans lequel ledit élément de réseau (4) comprend des moyens de réception (41) pour recevoir ladite photo d'appelant, des moyens de mémorisation (44) pour mémoriser ladite photo d'appelant et des moyens d'émission (42) pour émettre ladite photo d'appelant vers un terminal dudit tiers appelé,
dans lequel chacun de ladite pluralité de terminaux (2, 6) comprend des moyens de mémorisation (22) pour mémoriser ladite photo d'appelant et des moyens de sélection (25) pour sélectionner une opération d'émission directe
dans laquelle ladite photo d'appelant est générée et émise au début de l'appel, ou une opération de mémorisation dans laquelle ladite photo d'appelant est générée et mémorisée dans lesdits moyens de mémorisation (22), et
dans lequel ledit élément de réseau (4) comprend des moyens de contrôle (43) pour vérifier une information d'abonné dudit tiers appelé, mémorisée dans une base de données d'abonnés (81, 82) et pour contrôler lesdits moyens de mémorisation (44) sur la base de ladite information d'abonné,
dans lequel ladite information d'abonné indique un abonnement à un service de présentation de photo d'appelant.

2. Système selon la revendication 1, dans lequel ladite base de données est un registre de localisation (81, 82).

3. Système selon la revendication 1 ou 2, dans lequel ledit élément de réseau (4) consiste en des moyens de commutation dudit réseau de télécommunication.

4. Système selon la revendication 3, dans lequel lesdits moyens de commutation sont un centre de commutation du service mobile (4) ou un SGSN.

5. Système selon l'une quelconque des revendications 1 à 4, dans lequel ledit réseau de télécommunication est un réseau GSM ou un réseau UMTS.

6. Système selon l'une quelconque des revendications 1 à 5, dans lequel ledit terminal dudit tiers appelé et un terminal d'un tiers appelant sont tous deux des terminaux mobiles.

7. Elément de réseau pour un réseau de télécommunication, comprenant :
des moyens de réception (41) pour recevoir une photo d'appelant d'un terminal (2) d'un tiers appelant au début d'un appel ;
des moyens de mémorisation (44) pour mémoriser ladite photo d'appelant ;
des moyens d'émission (42) pour émettre ladite photo d'appelant vers un terminal (6) d'un tiers appelé, et
des moyens de contrôle (43) pour vérifier une information d'abonné dudit tiers appelé, mémorisée dans une base de données d'abonnés (81, 82), et pour contrôler lesdits moyens de mémorisation (44) sur la base de ladite information d'abonné,
dans lequel ladite information d'abonné indique un abonnement à un service de présentation de photo d'appelant.

8. Elément de réseau selon la revendication 7, comprenant en outre des moyens de contrôle (43) pour vérifier une information d'abonné dudit tiers appelé, mémorisée dans une base de données d'abonnés (81, 82), et pour contrôler lesdits moyens de mémorisation (44) de manière à effectuer l'opération de mémorisation sur la base de ladite information d'abonné.

9. Elément de réseau selon la revendication 8, dans lequel lesdits moyens de contrôle (43) sont agencés pour émettre une information de restriction vers ledit tiers appelant, si ladite information d'abonné indique que le tiers appelé n'est pas abonné à un service de présentation de photo d'appelant.

10. Elément de réseau selon l'une quelconque des revendications 7 à 9,
dans lequel ledit élément de réseau consiste en des moyens de commutation (4) dudit réseau de télécommunication.

11. Procédé pour fournir une photo d'appelant par l'intermédiaire d'un réseau de télécommunication à un tiers appelé, comprenant les étapes consistant à :
a) générer ladite photo d'appelant au niveau d'un terminal d'un tiers appelant ;
b) émettre ladite photo d'appelant vers ledit réseau de télécommunication au début d'un appel ;
c) mémoriser ladite photo d'appelant au niveau d'un élément de réseau dudit réseau de télécommunication ; et
d) émettre ladite photo d'appelant dudit élément de réseau vers un terminal dudit tiers appelé ;
dans lequel ledit élément de réseau reçoit ladite photo d'appelant et mémorise ladite photo d'appelant,
dans lequel ledit terminal sélectionne une opération d'émission directe
dans laquelle ladite photo d'appelant est générée et émise au début de l'appel, ou une opération de mémorisation dans laquelle ladite photo d'appelant est générée et mémorisée dans des moyens de mémorisation (22),
dans lequel ledit élément de réseau (4) vérifie une information d'abonné dudit tiers appelé, mémorisée dans une base de données d'abonnés (81, 82), et contrôle ladite mémorisation sur la base de ladite information d'abonné,
dans lequel ladite information d'abonné indique un abonnement à un service de présentation de photo d'appelant.

12. Procédé selon la revendication 11, dans lequel les étapes b) à d) sont effectuées en réponse à une information d'abonné indiquant un abonnement à un service supplémentaire pour fournir ladite photo d'appelant.

13. Procédé selon la revendication 12, dans lequel ladite information d'abonné indique une présentation de photo d'appelant ou une restriction de présentation de photo d'appelant.

14. Procédé selon l'une quelconque des revendications de procédé précédentes, dans lequel ladite photo d'appelant est prise par une fonction d'appareil photo au début de l'appel.

15. Procédé selon l'une quelconque des revendications 11 à 14, dans lequel ladite photo d'appelant est sélectivement mémorisée dans une mémoire dudit terminal dudit tiers appelant et émise de ladite mémoire vers ledit réseau de télécommunication au début de l'appel.

16. Procédé selon la revendication 15, dans lequel ladite opération de mémorisation sélective de ladite photo d'appelant dans ladite mémoire dudit terminal dudit tiers appelant est effectuée conformément à une opération d'entrée de sélection au niveau dudit terminal dudit tiers appelant.

17. Terminal d'abonné d'un réseau de télécommunication comportant au moins un élément de réseau pour acheminer des appels, ledit terminal d'abonné (2, 6) étant adapté pour une utilisation dans un système selon l'une quelconque des revendications de système précédentes, ou pour une utilisation dans un procédé selon l'une quelconque des revendications de procédé précédentes, comprenant :
a) des moyens formant appareil photo (1) pour générer une photo d'appelant ;
b) des moyens d'affichage (7) pour afficher une photo d'appelant reçue ;
c) des moyens d'émission (24) pour émettre ladite photo d'appelant générée vers ledit au moins un élément de réseau (4) au début d'un appel ;
d) des moyens de mémorisation (22) pour mémoriser ladite photo d'appelant générée ; et
e) des moyens de sélection (25) pour sélectionner une opération d'émission directe dans laquelle ladite photo d'appelant est générée et émise au début de l'appel, ou une opération de mémorisation dans laquelle ladite photo d'appelant est générée et mémorisée dans lesdits moyens de mémorisation (22).

18. Terminal d'abonné selon la revendication 17, comprenant en outre des moyens de commutation (23) pour, de manière sélective, connecter lesdits moyens d'émission (24) auxdits moyens formant appareil photo (1) ou auxdits moyens de mémorisation (22) conformément à une opération de sélection au niveau desdits moyens de sélection (25).

19. Terminal d'abonné selon la revendication 17 ou 18, dans lequel ledit terminal d'abonné est un terminal mobile (2).

20. Terminal d'abonné selon l'une quelconque des revendications 17 à 19, dans lequel ledit terminal d'abonné est un terminal ou un dispositif connecté à un réseau de télécommunication à lignes fixes.

21. Terminal d'abonné selon la revendication 20, dans lequel ledit réseau de télécommunication à lignes fixes est un réseau PSTN, un réseau ISDN ou un réseau local.
